# EUROPEAN PATENT APPLICATION

(11) **EP 4 741 674 A1**
(43) Date of publication of application: **13.05.2026**
(21) Application number: 24212358.6
(22) Date of filing: 12.11.2024
(51) Int. Cl.: F16C 19/06, F16C 19/52, F16C 33/58, F16C 19/26, G01L 5/00

(54) **BEARING RACE INCLUDING INTEGRATED PIEZOELECTRIC SENSOR**

(71) Applicant: NXP B.V., 5656 AG Eindhoven (NL)
(72) Inventor: Grießbach, Jan, 5656AG Eindhoven (NL); Marotzke, Adrian, 5656AG Eindhoven (NL)
(74) Representative: Miles, John Richard

(57) **Abstract**

A bearing race for a rolling element bearing (130) is described. The bearing race includes a metal region having an outer surface and an inner surface. The race has a groove in at least one of the outer surface and the inner surface. The groove extends around at least part of a circumference the outer surface or the inner surface. A piezoelectric layer (110) and a resistive layer (112) are located in the groove.

## Description

### FIELD

This disclosure relates to a bearing race for a rolling element bearing including an integrated piezoelectric sensor.

### BACKGROUND

Rolling element bearings which may be either ball bearings or roller bearings are used in a wide variety of applications such as motors, vehicles, industrial machinery, centrifuges, engines, and aircraft. Rolling element bearings include an inner race and an outer race with either bearing balls or rollers between. The bearing balls and rollers may be retained in position by a cage structure. Detecting faults and anomalies in such bearings is a critical part for example in preventing damage to electric motors and monitoring wear in critical components. External sensors, such as vibration sensors, can provide an indication of anomalies but may not give an accurate indication of the condition of the bearing.

### SUMMARY

Aspects of the disclosure are defined in the accompanying claims. In a first aspect, there is provided. A bearing race for a rolling element bearing, the bearing race comprising: a metal region having an outer surface and an inner surface and further comprising a groove in at least one of the outer surface and the inner surface, the groove extending around at least part of a circumference of the at least one of the outer surface and the inner surface; and a piezoelectric layer and a resistive layer in the groove.

In some embodiments, the groove extends around at least half of the circumference of at least one of the outer surface and the inner surface. In some embodiments, the groove extends around the circumference of at least one of the outer surface and the inner surface. In some embodiment, the groove extends substantially in a direction of rotation of the bearing race. Embodiments of the bearing race may be included in a rolling element bearing comprising an inner race and an outer race, wherein at least one of the inner race and the outer race comprises the bearing race. In some embodiments, the outer race comprises the bearing race and wherein the groove is in the outer surface of the metal region. In some embodiments, the inner race comprises the bearing race and wherein the groove is in the inner surface of the metal region. In some embodiments, the rolling element bearing is configured as a ball bearing. In some embodiments, the rolling element bearing is configured as a roller bearing. Embodiments of the rolling element bearing may be included in an electric motor.

Embodiments of the rolling element bearing may be included in a sensor system comprising a controller coupled to the rolling element bearing, the controller having a first terminal coupled to a first contact point on the resistive layer and a second terminal coupled to a second contact point on the resistive layer, wherein the controller is configured to measure a resistance value between the first contact point and the second contact point and to determine a manufacturing fault condition depending on the resistance value.

Embodiments of the rolling element bearing may be included in a sensor system comprising a controller coupled to the rolling element bearing, the controller having a first terminal coupled to a first contact point on the resistive layer and a second terminal coupled to a second contact point on the metal region, wherein the controller is configured to measure a piezoelectric voltage between the first point and the second point and to determine at least one of a fault condition and a vibration level of the ball bearing depending on a piezoelectric voltage value.

Embodiments of the rolling element bearing may be included in a sensor system comprising a controller coupled to the rolling element bearing, the controller comprising a plurality of terminals connected to a plurality of contact points on the resistance layer and a further terminal connected to a contact point on the metal region, wherein the controller is configured to measure a plurality of voltage values between each of the plurality of terminals and the further terminal and to determine at least one of a fault condition and a fault location of the rolling element bearing depending on the plurality of voltage values. In some embodiments, the controller is further configured to measure a resistance value between a first point of the plurality of contact points and a second contact point of the plurality of points and to determine a manufacturing fault condition depending on the resistance value.

In a second aspect, there is provided a method of detecting a manufacturing fault in a bearing race for a rolling element bearing, the bearing race comprising: a metal region having an outer surface and an inner surface and further comprising a groove in at least one of the outer surface and the inner surface, the groove extending around at least part of a circumference of the at least one of the outer surface and the inner surface; and a piezoelectric layer and a resistive layer in the groove; the method comprising: measuring a resistance value between at least two points on the resistive layer; and determining a fault from the resistance value.

In a third aspect, there is provided a method of sensing an operating status of a bearing race for a rolling element bearing, the bearing race comprising: a metal region having an outer surface and an inner surface and further comprising a groove in at least one of the outer surface and the inner surface, the groove extending around at least part of a circumference of the at least one of the outer surface and the inner surface; and a piezoelectric layer and a resistive layer in the groove; the method comprising: measuring a piezo-electric voltage between at least one point on the resistive layer and a point of the metal region. In some, embodiments, the method further comprises determining a vibration level of the rolling element bearing from the piezo-electric voltage. In some, embodiments, the method further comprises determining an anomaly in the rolling element bearing from the piezo-electric voltage.

### BRIEF DESCRIPTION OF THE DRAWINGS

In the figures and description like reference numerals refer to like features. Embodiments are now described in detail, by way of example only, illustrated by the accompanying drawings in which:
Figure 1A shows a sensor system including a view of a front or back of a ball bearing and a controller according to an embodiment.
Figure 1B shows the sensor system of figure 1A with a side view of the ball bearing.
Figure 1C which shows a view of a cross section of the ball bearing of the sensor system of figure 1A.
Figure 2A shows a sensor system including a view of a front or back of a roller bearing and a controller according to an embodiment.
Figure 2B shows the sensor system of figure 2A with a side view of the roller bearing.
Figure 2C which shows a view of a cross section of the roller bearing of the sensor system of figure 2A.
Figure 3 shows a sensor system including a side view of a ball bearing and a controller according to an embodiment.
Figures 4A-4F illustrate a bearing race and a method of manufacturing a bearing race according to an embodiment.
Figure 5 shows a method of detecting a fault in a rolling element bearing including a bearing race including an integrally formed piezoelectric sensor according to an embodiment.
Figure 6 illustrates a method of vibration detection in a rolling element bearing including a bearing race including an integrally formed piezoelectric sensor according to an embodiment.
Figure 7 shows a method of anomaly detection in a rolling element bearing including a bearing race including an integrally formed piezoelectric sensor according to an embodiment.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### DETAILED DESCRIPTION OF EMBODIMENTS

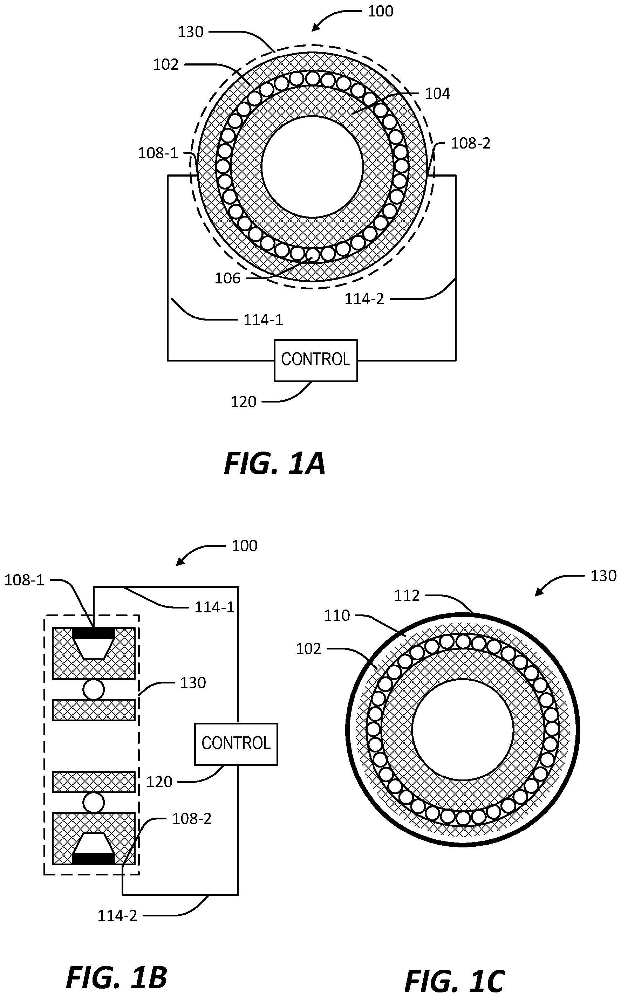

Figure 1A shows a sensor system 100 including a view of a front (or back) of a ball bearing 130 and a controller 120 according to an embodiment. Figure 1B shows the system 100 with a side view of the ball bearing 130. The bearing includes a circular metal outer race 102 which in operation may be static (fixed) and a circular metal inner race 104 which may be free to rotate. As illustrated, bearing balls 106 are between the inner race 104 and outer race 102. In other examples rollers may be located between the inner race 104 and the outer race 102. The controller 120 is connected with wire 114-1 to a first connection point 108-1 and connected with wire 114-2 to second connection point 108-2. The outer race 102 includes a groove in the outer surface of the metal region including a piezo electric layer 110 ( layer of piezoelectric material ) and a resistive layer 112 coating the piezoelectric layer. The first connection point 108-1 is made on the resistive layer 112 and the second connection point 108-2 is made on the metal of the outer race 102. The piezo electric layer 110 may include for example a piezoelectric ceramic material. The resistive layer 112 may for example be formed using graphite, carbon particles in plastic, a ceramic metal composite usually referred to as cermet. The piezoelectric layer 110 and resistive layer 112 extend around the entire circumference of the outer race 102. This is illustrated in figure 1C which shows a view of a cross section of the ball bearing 130 viewed from the front (or back) taken along the line of the groove or channel.

The bearing 130 includes a piezoelectric layer 110 which forms a large circular piezoelectric element formed as part of the outer race 102 of the bearing. The entire bearing 130 acts as a sensor. In operation, a deformation of the outer race 102 causes a deformation of the piezoelectric element causing a detectable piezoelectric voltage change. The outer race of the bearing may be (temporarily) deformed at any position due to for example, motor faults or mechanical wear. In operation, the controller 120 may detect the voltage change via wires 114-1, 114-2. In some examples, the controller 120 may determine a vibration level of the bearing 130 and/or the apparatus including the bearing from the voltage change. Alternatively, or in addition, in some examples the controller 120 may determine a fault condition of the bearing 130 and/or the apparatus including the bearing from the voltage change.

Because the piezo electric element extends around the entire circumference of the outer race and is integrally formed as part of the outer race 102, the resulting sensor may more accurately monitor the behaviour of the bearing 130. In some examples the piezoelectric element may extend partially around the circumference of the outer race 102 for example half the circumference or more. The controller 120 may be implemented in hardware or a combination of hardware and software. The controller 120 may be implemented as a microcontroller. In some examples one or more additional connections (not shown) may be made to the resistive layer. In these examples, the controller 120 may apply a current via the first connection point 108-1 and measure a voltage drop between the first connection point 108-1 and one of the additional connection points to determine a resistance value and thereby determine whether the resistive layer 112 has a manufacturing fault.

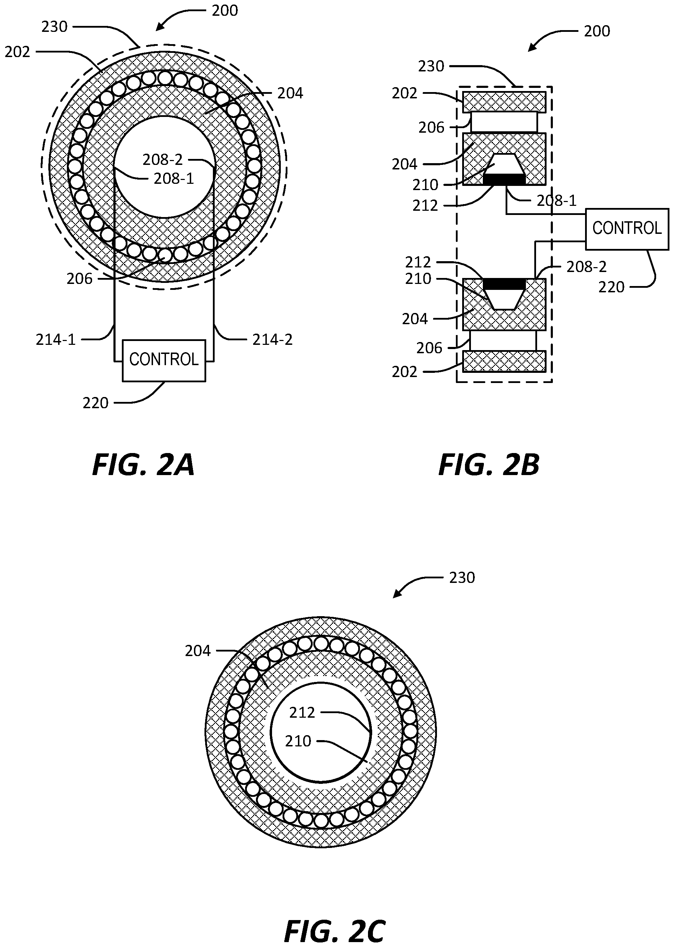

Figure 2A shows a sensor system 200 including a view of a front ( or back) of a roller bearing 230 and a controller 220 according to an embodiment. Figure 2B shows the sensor system 200 with a side view of the bearing 230. The bearing includes a metal outer race 202 which may be free to rotate and a metal inner race 104 which may be fixed. As illustrated, rollers 206 are between the inner race 204 and outer race 202. In other examples bearing balls may be located between the inner race 204 and the outer race 202. The controller 220 is connected with wire 214-1 to a first connection point 208-1 and connected with wire 214-2 to second connection point 208-2.The inner race 202 includes a groove in the inner surface of the metal region including a piezo electric layer 210 and a resistive layer 212 coating the piezoelectric layer. The connection points 208-1, 208-2 are made on the resistive layer 212. The piezo electric layer 210 may include for example a piezoelectric ceramic material. The resistive layer 212 may for example be formed using graphite, carbon particles in plastic, a ceramic metal composite usually referred to as cermet. The piezoelectric layer 210 and resistive layer 212 extend around the entire circumference of the inner surface of the inner race 204. This is illustrated in figure 2C which shows a view of a cross section of the bearing 230 viewed from the front (or back) taken along the line of the groove.

The bearing 230 includes a piezoelectric layer 210 which forms a large circular piezoelectric element formed as part of the inner race 202 of the bearing 230. The entire bearing 230 acts as a sensor. In operation, a deformation of the inner race 204 may result in a deformation of the piezoelectric element causing a detectable voltage change. The inner race 204 of the bearing may be (temporarily) deformed at any position due to for example, motor faults or mechanical wear. In operation, the controller 220 may detect a voltage between wires 214-1, 214-2. In some examples, the controller 220 may determine a vibration level of the bearing 230 and/or the apparatus including the bearing from the voltage. Alternatively, or in addition, in some examples the controller 220 may determine a fault condition of the bearing 230 and/or the apparatus including the bearing from the voltage.

Because the piezoelectric element extends around the entire circumference of the inner surface of the inner race 202 and is integrally formed as part of the inner race 202, the resulting sensor may be used to accurately monitor the behaviour of the bearing 230. In some examples the piezoelectric element may extend partially around the circumference of the outer race 202 for example half the circumference or more. The controller 220 may be implemented in hardware or a combination of hardware and software. The controller 220 may be implemented as a microcontroller. In some examples one or more additional connections (not shown) may be made to the resistive layer 212. In these examples, the controller 220 may apply a current via the first connection point 208-1 and measure a voltage drop between the first connection point 208-1 and one of the additional connection points to determine a resistance value and thereby determine whether the resistive layer 112 has a manufacturing fault.

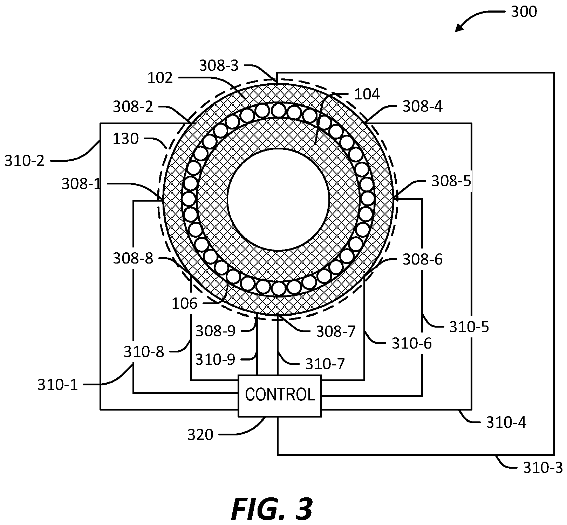

Figure 3 shows a sensor system 300 including a view of a front (or back) of the ball bearing 130 and a controller 320 according to an embodiment. A number of wires 310-1, 310-2, 310-3, 310-4, 310-5, 310-6, 310-7, 310-8 are connected between a respective controller terminal of the controller 320 to a respective contact point 308-1, 308-2, 308-3, 308-4, 308-5, 308-6, 308-7, 308-8 on the resistive layer 112. A wire 310-9 is connected to a contact point 308-9 on the metal region of the race 102.

In operation, the controller 320 may detect a voltage between each of wires 310-1 to 310-8 and the wire 310-9. The controller 320 may detect a deformation and the position of the deformation from the voltage measurements. In general, for n wires the determination may be made with an angular resolution of 360/(n-1) degrees, with n being the number of wires since one wire 310-9 connects to the race 102. The controller 320 may also identify what kind of anomaly/fault has occurred from the additional measurements. In addition, the controller 320 may determine resistance values between connection points on the resistive layer 112 to determine whether the resistive layer 112 has a manufacturing fault or has developed a defect during operation. In other examples of the sensor system the controller may have fewer or more connections to the resistive layer 112.

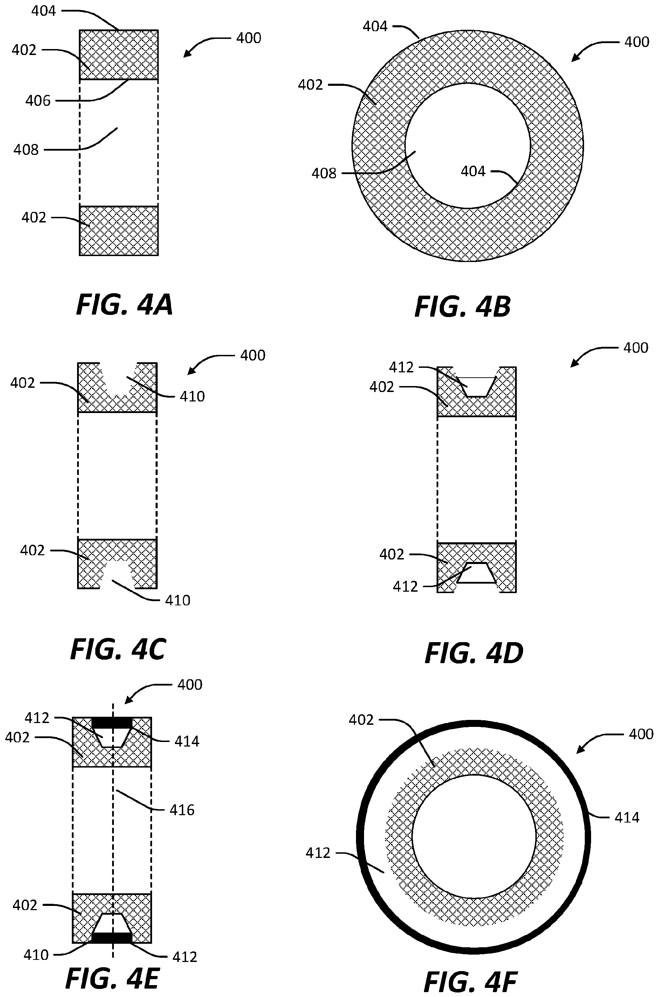

Figures 4A to 4F shows a method of manufacturing a bearing race 400 with integrated piezoelectric sensor according to an embodiment. The bearing race 400 may be used in rolling element bearings. Figure 4A shows an end view of bearing race 400 and figure 4B shows the corresponding plan view. The bearing race has a metal region 402 having an outer surface 404 and an inner surface 406. As illustrated the bearing race 400 may be an outer race. The hollow central portion 408 may accommodate an inner race and bearing balls or rollers ( not shown) Figure 4C illustrates an end view of race 400 showing the groove or channel 410 which may be machined out of the metal region 402. Figure 4D shows an end view of race 400 with the piezoelectric layer 412 which may be formed by sintering ceramic powder into the groove 410. Figure 4E shows an end view of race 400 with the resistive coating layer 414 formed over the piezoelectric layer. Figure 4F shows the corresponding front view showing the circular piezoelectric element taken as a cross section along line 416. The bearing race 400 having the inner surface 406 to accommodate bearing balls or rollers may be used as the outer race 102, 202 in bearings 130, 230. It will be appreciated that a similar process may be used to form inner race 104, 204.

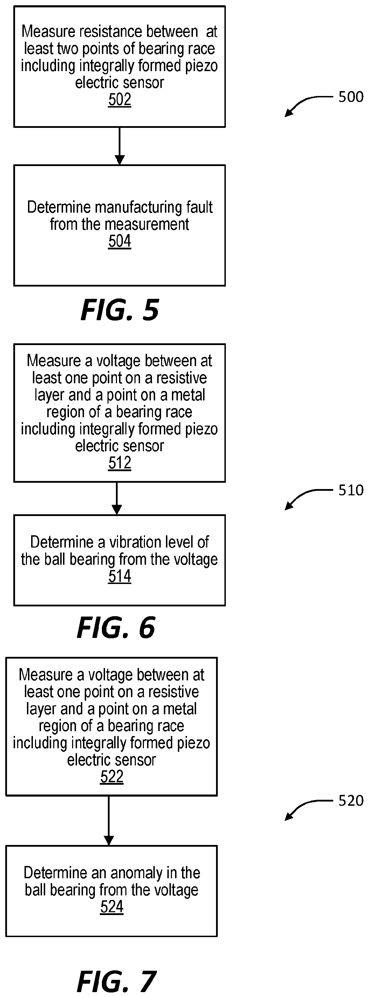

Figure 5 shows a method 500 of detecting a fault in a rolling element bearing including a bearing race including an integrally formed piezoelectric sensor or element according to an embodiment, for example bearing race 130, 230, 400. In step 502 the resistance between at least two points of the resistance layer in a bearing race is measured. In step 504, a determination of whether or not a manufacturing fault is present may be made dependent on the resistance measurement.

Figure 6 shows a method 510 of vibration detection in a rolling element bearing including a bearing race including an integrally formed piezoelectric sensor or element according to an embodiment, for example bearing race 102, 204, 400. In step 512 the piezo-electric voltage between at least one point of the resistance layer and a metal region of a bearing race may be measured. The voltage may correspond to deformation of the piezoelectric element. In step 514, a determination of a vibration level of the bearing may be made dependent on the measurement.

Figure 7 shows a method 520 of anomaly detection in a rolling element bearing including a bearing race including an integrally formed piezoelectric sensor or element according to an embodiment, for example bearing race 102, 204, 400. In step 522 the piezo-electric voltage between at least one point of the resistance layer and a metal region of a bearing race such as bearing race 102, may be measured. The voltage may correspond to deformation of the piezoelectric element. In step 524, a determination of an anomaly or fault of the bearing or apparatus including the bearing may be made dependent on the measurement.

One or more embodiments may include a circular piezoelectric element as part of the bearing race of a ball bearing or roller bearing, along the entire circumference. The circular piezoelectric element with a resistive coating, with at least two wires attached to the coating for connection to a controller. The controller may apply a voltage to the resistive coatings to check for defects of the coating as a form of error detection. Deformations and irregular motion of the ball bearings lead to a measurable voltage from the piezoelectric element. This allows the detection of bearing and motor faults and other anomalies. Multiple wires can be attached to determine the position of the anomaly more accurately. Embodiments of the bearing race and the sensor system may be including in bearing for motors, vehicles, industrial machinery, centrifuges, engines, aircraft or anywhere where rolling element bearings are used.

A bearing race for a rolling element bearing is described. The bearing race includes a metal region having an outer surface and an inner surface. The race has a groove in at least one of the outer surface and the inner surface. The groove extends around at least part of a circumference the outer surface or the inner surface. A piezoelectric layer and a resistive layer are located in the groove.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A bearing race for a rolling element bearing, the bearing race comprising:
a metal region having an outer surface and an inner surface and further comprising a groove in at least one of the outer surface and the inner surface, the groove extending around at least part of a circumference of the at least one of the outer surface and the inner surface; and
a piezoelectric layer and a resistive layer in the groove.

2. The bearing race of claim 1, wherein the groove extends around at least half of the circumference of at least one of the outer surface and the inner surface.

3. The bearing race of any preceding claim, wherein the groove extends around the circumference of at least one of the outer surface and the inner surface.

4. The bearing race of any preceding claim, wherein the groove extends substantially in a direction of rotation of the bearing race.

5. A rolling element bearing comprising an inner race and an outer race, wherein at least one of the inner race and the outer race comprises the bearing race of any preceding claim.

6. The rolling element bearing of claim 5, wherein the outer race comprises the bearing race and wherein the groove is in the outer surface of the metal region.

7. The rolling element bearing of claim 5 or claim 6, wherein the inner race comprises the bearing race and wherein the groove is in the inner surface of the metal region.

8. The rolling element bearing of any of claims 5 to 7 configured as a ball bearing.

9. The rolling element bearing of any of claims 5 to 7 configured as a roller bearing.

10. An electric motor comprising the rolling element bearing of claim 8.

11. A sensor system comprising a controller coupled to the rolling element bearing of any of claims 5 to 9, the controller having a first terminal coupled to a first contact point on the resistive layer and a second terminal coupled to a second contact point on the resistive layer, wherein the controller is configured to measure a resistance value between the first contact point and the second contact point and to determine a manufacturing fault condition depending on the resistance value.

12. A sensor system comprising a controller coupled to the rolling element bearing of any of claims 5 to 9, the controller having a first terminal coupled to a first contact point on the resistive layer and a second terminal coupled to a second contact point on the metal region, wherein the controller is configured to measure a piezoelectric voltage between the first point and the second point and to determine at least one of a fault condition and a vibration level of the ball bearing depending on a piezoelectric voltage value.

13. A sensor system comprising a controller coupled to the rolling element bearing of any of claims 5 to 9, the controller comprising a plurality of terminals connected to a plurality of contact points on the resistance layer and a further terminal connected to a contact point on the metal region, wherein the controller is configured to measure a plurality of voltage values between each of the plurality of terminals and the further terminal and to determine at least one of a fault condition and a fault location of the rolling element bearing depending on the plurality of voltage values.

14. The sensor system of claim 13, wherein the controller is further configured to measure a resistance value between a first point of the plurality of contact points and a second contact point of the plurality of points and to determine a manufacturing fault condition depending on the resistance value.

15. A method of sensing an operating status of a bearing race for a rolling element bearing, the bearing race comprising:
a metal region having an outer surface and an inner surface and further comprising a groove in at least one of the outer surface and the inner surface, the groove extending around at least part of a circumference of the at least one of the outer surface and the inner surface; and
a piezoelectric layer and a resistive layer in the groove; the method comprising:
measuring a piezo-electric voltage between at least one point on the resistive layer and a point of the metal region.
